# EUROPEAN PATENT APPLICATION

(11) **EP 2 557 352 A1**
(43) Date of publication of application: **13.02.2013**
(21) Application number: 10849482.4
(22) Date of filing: 24.08.2010
(51) Int. Cl.: F21S 2/00, G02B 6/00, G02F 1/13357, F21Y 101/02

(54) **SURFACE LIGHT SOURCE DEVICE AND ELECTRONIC DEVICE PROVIDED WITH SAME**

(30) Priority: 09.04.2010 JP 2010090913
(71) Applicant: Sharp Kabushiki Kaisha, Osaka-shi, Osaka 545-8522 (JP)
(72) Inventor: NISHIOKA, Sumito, Osaka-shi, Osaka 545-8522 (JP); TAKAYAMA, Takeshi, Osaka-shi, Osaka 545-8522 (JP); SAKAI, Keiji, Osaka-shi, Osaka 545-8522 (JP); IKUTA, Kazuya, Osaka-shi, Osaka 545-8522 (JP); ISHIMURA, Ryoji, Osaka-shi, Osaka 545-8522 (JP); ISHIZAKA, Takuya, Osaka-shi, Osaka 545-8522 (JP)
(74) Representative: Müller - Hoffmann & Partner
(86) International application number: PCT/JP2010/064248
(87) International publication number: WO 2011/125242

(57) **Abstract**

A light source module (10), as a surface light source device of the present invention, includes: a plurality of light guides (21) provided such that their respective longitudinal directions are arranged along each other with a gap (22) therebetween; light sources; and a support member (31) for supporting the light guides (21) with the gap (22) of a predetermined dimension, a light-exit surface (21d) of a thick part (21c) of the light guide (21) protruding farther in the light-exit side than a protrusion (31a) of the support member (31) protruding along the gap (22). It is possible to provide a surface light source device facilitating a high quality display, in which a light guide plate is divided into a plurality of light guides and the light guides are provided such that their respective longitudinal directions are arranged along each other, and an electronic apparatus including the surface light source device.

## Description

### Technical Field

The present invention relates to a surface light source device to be provided in the surface light source device, as a backlight. The surface light source device of the present invention includes a side-edge (also referred to as a side-light) type light guide plate through which light from light sources is emitted planarly.

### Background Art

Recently, in a field of liquid crystal display devices, backlights are widely used each of which include a side-edge (also referred to as a side-light) type light guide plate through which light from light sources is emitted planarly, in order that thin-typed liquid crystal display devices are realized.

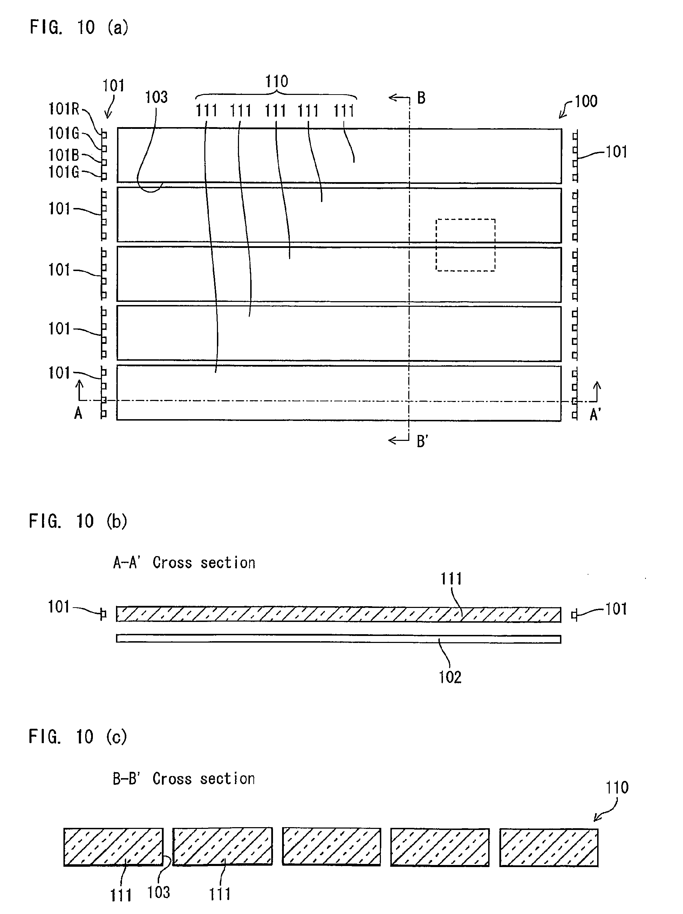

Examples of such a side-edge type light guide plate include an illumination device disclosed in a Patent Literature 1. Fig. 10(a) is a plan view illustrating a configuration of the illumination device 100 disclosed in Patent Literature 1. Fig. 10(b) is a cross sectional view taken along the line A-A' in Fig. 10(a). Fig. 10(c) is a cross sectional view taken along the line B-B' in Fig. 10(a). As illustrated in Fig. 10(a), the illumination device 100 disclosed in Patent Literature 1 includes: a light guide plate 110 constituted by a plurality of light guides 111 arranged in a row; and a plurality of light sources 101 which (i) are provided for each of the light guides 111 of the light guide plate 110 and (ii) irradiate the light guides 111 with light. Each of the light sources 101 constituted by one red LED (Light Emitting Diode) 101R, two green LEDs 101G, and one blue LED 101B. As illustrated in Fig. 10(b), a reflecting sheet 102 is provided below the light guide plate 110. As illustrated in Fig. 10(c), gaps 103 (air layers) of not less than 0.1 µm are formed between the adjacent light guides 111. This configuration enables pseudo impulse type display.

However, since the gaps 103 provided between the light guides 111 are air layers, there is a risk that a central part of the light guide 111 is bowed due to its own weight, for example, and the gaps 103 cannot be ensured. There is a further risk that the light guide 111 rises towards a light-exit side so as to damage another member (such as an optical sheet) provided on the light-exit side. In view of the circumstances, it is necessary to additionally provide support members for fixing the light guides 111 at predetermined positions, so that the gaps 103 are ensured.

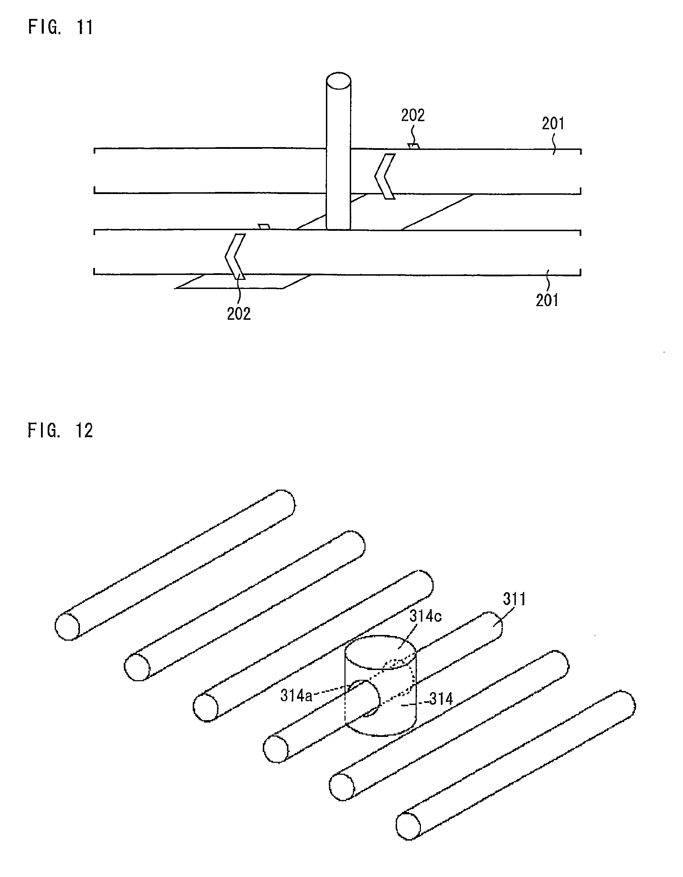

For example, Patent Literature 2 employs a lamp holder 202 as illustrated in Fig. 11, as a member for supporting a plurality of fluorescent tubes 201 arranged in parallel. However, the lamp holder 202 is not a light guide (light guide plate). The lamp holder 202 (i) has a holding shape of a not-complete circle with a partial opening, and (ii) is constituted by a flexible transparent member.

Furthermore, Patent Literature 3 discloses a surface light source device for use as a backlight of a liquid crystal display device. In the configuration of the surface light source device, an optical sheet 313 is supported by a transparent support member 314 having a hole 314a through which an arc tube 311 passes (see Fig. 12). The transparent support member 314 is however not a member that supports a plurality of members together.

### Citation List

### Patent Literature

Patent Literature 1
   Japanese Patent Application Publication, Tokukai No, 2008-34372 A (Publication Data: February 14, 2008)
Patent Literature 2
   Japanese Patent Application Publication, Tokukai No. 2001-210126 A (Publication Data: August 3, 2001)
Patent Literature 3
   Japanese Patent Application Publication, Tokukai No. 2006-43706 A (Publication Data: March 30, 2006)

### Summary of Invention

### Technical Problem

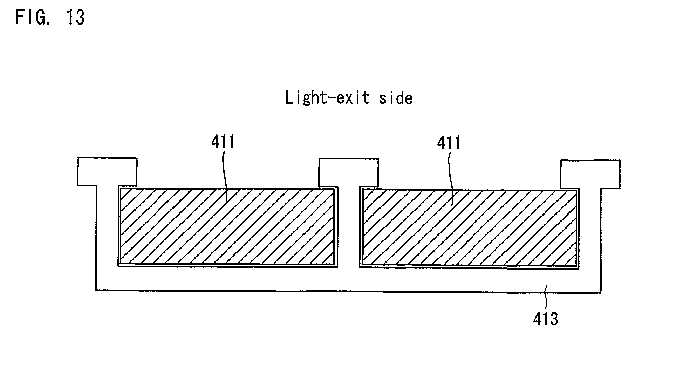

Let it be assumed that a configuration illustrated in Fig. 11 or 12 is applied to a configuration of Fig. 10(a) in which the light guide plate 110 is divided into a plurality of light guides 111 and the divided light guides 111 are provided such that their respective longitudinal directions are arranged along each other. Fig. 13 illustrates a resulting configuration in which the support member of Fig. 11 or 12 is provided in a gap 403 between adjacent light guides 411. According to the configuration of Fig. 13, within an image plane effective area, the support member 413 is provided between the light guides 411 and the top of the support member 413 protrudes farther than light-exit surfaces of the light guides 411 in a light-exit direction.

The inventors of the present application remarked that, in a case where the configuration of Fig. 13 is applied, the support member 413 will be recognized as luminance unevenness by a viewer. And, as the result of diligent studies, the inventors found the reason why the support member 413 is recognized as luminance unevenness. This is because, within the image plane effective area, the top of the support member 413 protrudes farther than the light-exit surfaces of the light guides 411 in the light-exit direction.

### Solution to Problem

The present invention has been accomplished in view of the conventional problems, and an object of the present invention is to provide (i) a surface light source device facilitating a high quality display, in which a light guide plate is divided into a plurality of light guides, and the divided light guides are provided such that their respective longitudinal directions are arranged along each other, and (ii) an electronic apparatus including the surface light source device.

That is, in order to solve the above-mentioned problem, a surface light source device in accordance with the present invention is a surface light source device including: a plurality of light guides being provided such that their respective longitudinal directions are arranged along each other with a gap therebetween; light sources for causing light to enter the plurality of light guides; and a support member which includes (i) a base provided on an opposite side of light-exit surfaces of the light guides and (ii) protrusions each protruding from the base along the gap; the light-exit surface of each of the light guides being such that at least part of the light-exit surface protrudes farther than a distal end of the protrusion in a light-exit direction.

According to the configuration, the support member is provided, in a configuration in which the light guide plate is divided into a plurality of light guides, and the divided light guides are provided such that their respective longitudinal directions are arranged along each other. It is thus possible to maintain the gap of a predetermined dimension between the light guides.

Further, according to the configuration of the surface light source device of the present invention, the light-exit surface of each of the light guides is such that at least part of the light-exit surface protrudes farther than the distal end of the protrusion in the light-exit direction. That is, the distal end of the protrusion of the support member is located at a position (recess) depressed from the light-exit surface of the light guide. According to the configuration, a viewer who views a display means (such as a liquid crystal panel) arranged on a light-exit surface side of the light guide can hardly recognize the support member with the protrusions. That is, it is possible to prevent the luminance unevenness resulting from the support member, as early described.

Therefore, even in a case where the surface light source device is configured such that the light guides are supported by the support member with the protrusions within the image plane effective area, the surface light source device enables to facilitate a high quality display. And, the surface light source device can contribute to improvement in display quality of a liquid crystal display device equipped with such a surface light source device as a backlight.

Other object, features and advantages of the present invention will be appreciated with reference to the description below. Advantages of the present invention will also be appreciated with reference to the description below on the basis of the attached drawings.

The present invention encompasses an electronic apparatus including a surface light source device having the above mentioned configuration.

### Advantageous Effects of Invention

As described above, the present invention is directed to a surface light source device including: a plurality of light guides being provided such that their respective longitudinal directions are arranged along each other with a gap therebetween; light sources for causing light to enter the plurality of light guides; and a support member which includes (i) a base provided on an opposite side of light-exit surfaces of the light guides and (ii) protrusions each protruding from the base along the gap; the light-exit surface of each of the light guides being such that at least part of the light-exit surface protrudes farther than a distal end of the protrusion in a light-exit direction.

According to the configuration, it is possible to provide (i) a surface light source device facilitating a high quality display, in which a light guide plate is divided into a plurality of light guides, and the divided light guides are provided such that their respective longitudinal directions are arranged along each other, and (ii) an electronic apparatus including the surface light source device.

### Brief Description of Drawings

Fig. 1

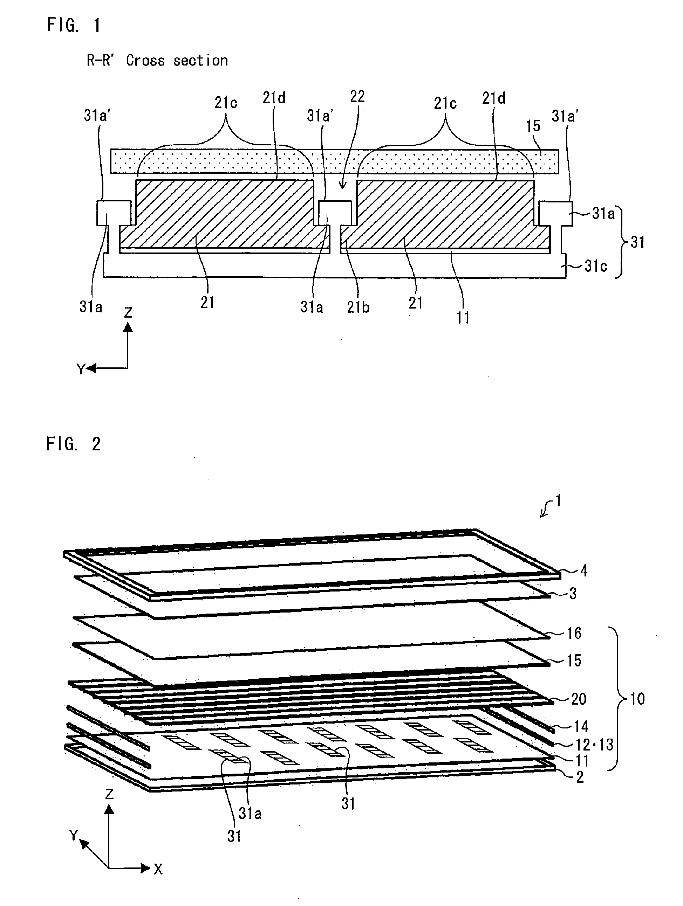

   Fig. 1 is a schematic cross sectional view illustrating schematically a configuration of a surface light source device (light source module) of the present invention.
Fig. 2
   Fig. 2 is an exploded perspective view illustrating a liquid crystal display device in which the surface light source device of Fig. 1 is used as a light source module.
Fig. 3

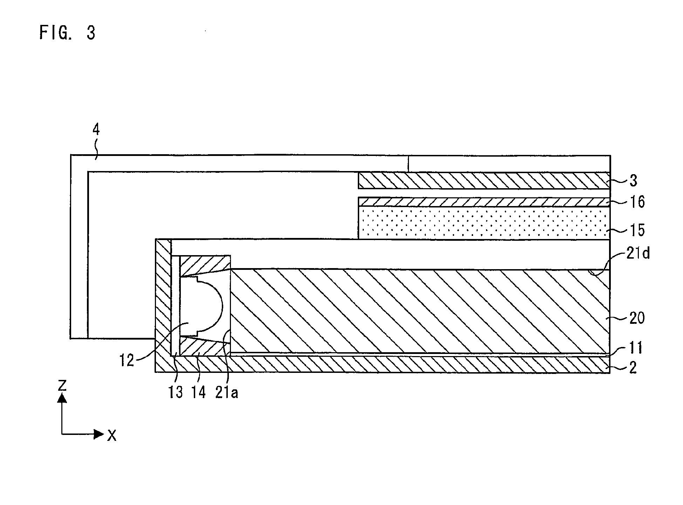

   Fig. 3 is a cross sectional view illustrating part of a configuration of the liquid crystal display device.
Fig. 4

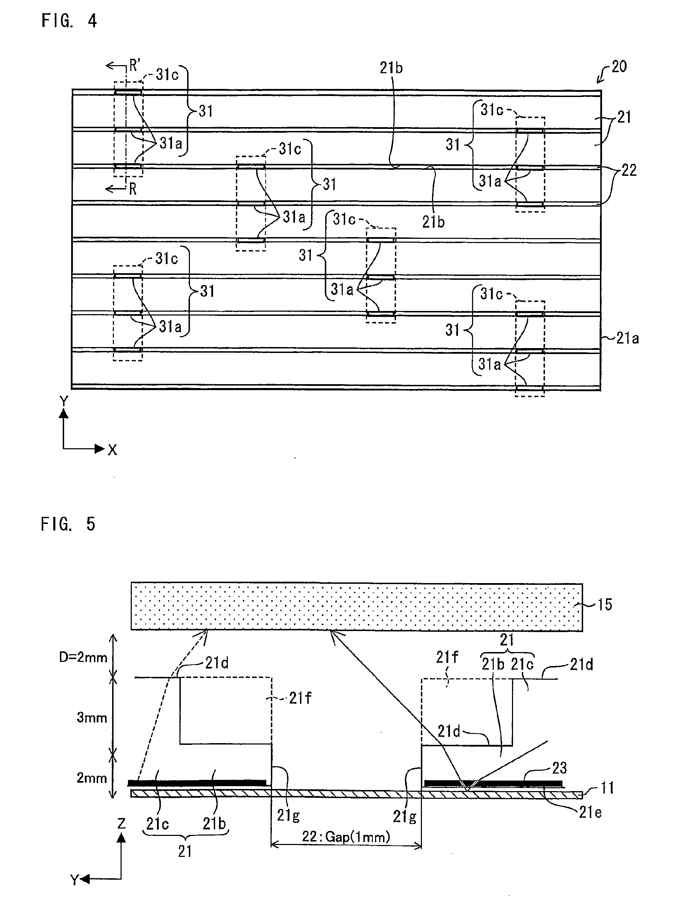

   Fig. 4 is a plan view illustrating a configuration of a light guide plate in the light source module.
Fig. 5
   Fig. 5 is a cross sectional view illustrating the light source module including the light guide plate, i.e., illustrating light paths in end parts of a plurality of light guides having absent parts on a light-exit side.
Fig. 6(a)

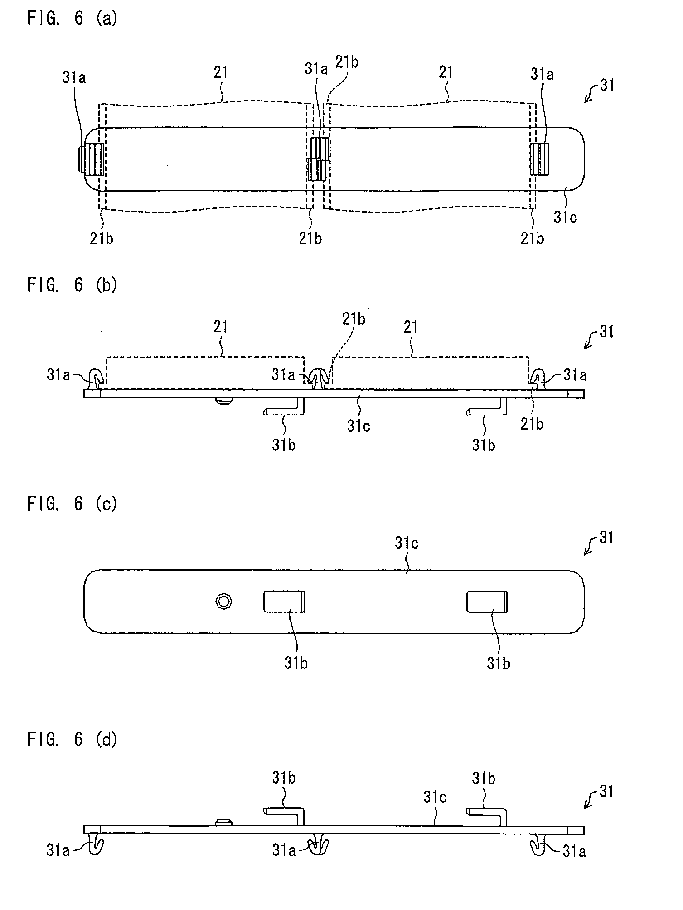

   Fig. 6(a) illustrates an exemplified shape of a support member provided in another embodiment of the surface light source device (light source module) of the present invention.
Fig. 6(b)
   Fig. 6(b) illustrates the exemplified shape of the support member provided in another embodiment of the surface light source device (light source module) of the present invention.
Fig. 6(c)
   Fig. 6(c) illustrates the exemplified shape of the support member provided in another embodiment of the surface light source device (light source module) of the present invention.
Fig. 6(d)
   Fig. 6(d) illustrates the exemplified shape of the support member provided in another embodiment of the surface light source device (light source module) of the present invention.
Fig. 7(a)

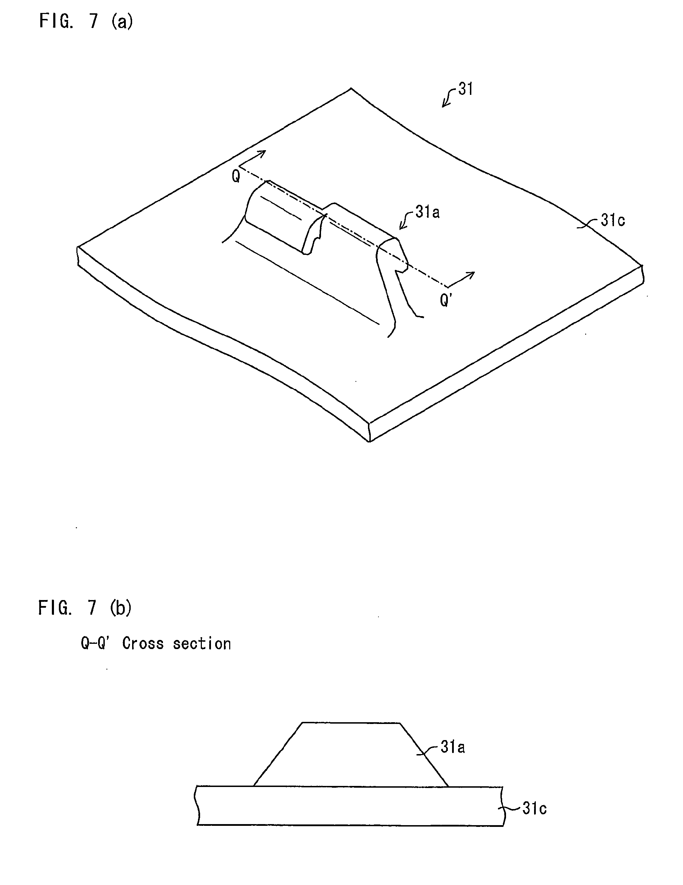

   Fig. 7(a) is a perspective view illustrating the support member illustrated in Figs. 6(a) through 6(d).
Fig. 7(b)
   Fig. 7(b) is a cross sectional view taken along the line Q-Q' in Fig. 7(a).
Fig. 8

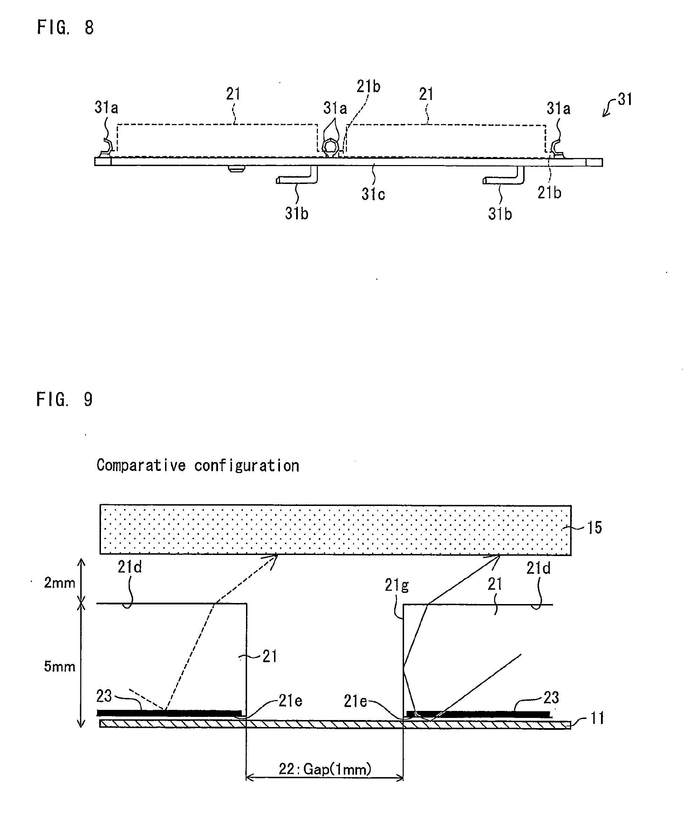

   Fig. 8 illustrates an exemplified shape of yet another support member.
Fig. 9
   Fig. 9 is a cross sectional view illustrating light paths in end parts of light guides of a light source module as a comparative configuration.
Fig. 10(a)
   Fig. 10(a) is a plan view illustrating a configuration of a conventional light source module.
Fig. 10(b)
   Fig. 10(b) is a front view illustrating a configuration of the light source module in Fig. 10(a).
Fig. 10(c)
   Fig. 10(c) is a cross sectional view taken along the line B-B' in Fig. 10(a).
Fig. 11
   Fig. 11 illustrates a conventional configuration.
Fig. 12
   Fig. 12 illustrates a conventional configuration.
Fig. 13
   Fig. 13 is a schematic cross sectional view illustrating the state in which light guides are supported by a support member in a conventional light source module.

### Description of Embodiments

### [Embodiment 1]

The following description will discuss Embodiment 1 of the present invention. Embodiment 1 will discuss an example in which a surface light source device of the present invention is applied to a light source module for a liquid crystal display device as an electronic apparatus. Note, however, that the present invention is not limited to this.

Fig. 2 is an exploded perspective view illustrating a liquid crystal display device 1.

As illustrated in Fig. 2, the liquid crystal display device 1 includes: a chassis 2; a light source module (surface light source device) 10; a liquid crystal panel 3; and a bezel 4, in the stated order from the bottom thereof. Of these components, the light source module 10 (surface light source device) includes: a reflecting sheet 11 as a reflective plate; LEDs (Light Emitting Diode) 12 as light sources; LED substrates 13; reflectors 14; a light guide plate 20; a diffusion plate 15; and an optical sheet group 16. Note that, the reflecting sheet 11 and the diffusion plate 15 in the light source module 10 are not essential components of the surface light source device of the present invention.

The LEDs 12, the LED substrates 13, and the reflectors 14 are provided in end parts of the light guide plate 20 as illustrated in Fig. 3. Accordingly, light from the LED 12 enters one edge surface 21a of the light guide plate 20 and exits from a light-exit surface 21d of the light guide plate 20. The light having exited passes through respective of the diffusion plate 15 and the optical sheet group 16, and then illuminates the liquid crystal panel 3. Therefore, the light source module 10 of Embodiment 1 employs a side-edge (also referred to as a side-light) system.

Meanwhile, the liquid crystal display device 1 has a problem that a moving image blurs, as compared with a CRT (Cathode-Ray Tube) display device. That is, in the CRT display device, a non-light-emitting period in which no light is emitted at a pixel is provided between a light-emitting period for the pixel in a first frame and a light-emitting period for the pixel in a second frame by which the first frame is followed. This results in less residual images. In contrast, the liquid crystal display device 1, which employs a "hold" type display in which no non-light-emitting period is provided, generates residual images. The residual images appear to a user as a moving image blur.

In view of the circumstances, a backlight blinking has been proposed for the backlight type liquid crystal display device 1 of Embodiment 1. The backlight blinking is a technology that inserts a black display between image displays by (i) dividing the light source module 10, which serves as a backlight, and (ii) sequentially turning off the divided parts of the light source module 10 in synchronization with a timing at which a video signal is supplied to the liquid crystal panel 3. This technology enables (i) realizing pseudo impulse type display and thus (ii) preventing the residual images.

In order to carry out the backlight blinking, the light source module 10 of Embodiment 1 has a configuration such that the light guide plate 20 is divided into a plurality of light guides 21, and the plurality of light guides 21 are provided such that their respective longitudinal directions are arranged along each other with a gap 22 between the adjacent light guides 21 (see Fig. 4). As illustrated in Fig. 3, therefore, Embodiment 1 is configured such that the LED 12 emits light into a thick part 21c (described later) in the edge surface 21a, which is one of the edge surfaces in the longitudinal direction of the light guide 21. Note that the light is not necessarily emitted into the edge surface 21a. Alternatively, the light can be emitted into the other edge surface in the longitudinal direction. Further alternatively, the light can be emitted into both edge surfaces, i.e., the one edge surface and the other edge surface. That is, the present invention is not limited to a specific configuration as to the side into which light is emitted, provided that light can be emitted into at least one edge surface 21 a.

In a case where the light guide plate 20 is divided into a plurality of light guides 21 and the plurality of light guides 21 are provided such that their respective longitudinal directions are arranged along each other, the gap 22 is required to be of about 3 mm, more preferably of about 1 to 2 mm, taking into consideration thermal expansion and production tolerances of the light guides 21. This requirement is to prevent the occurrence of luminance unevenness which results from the gap between the light guides 21.

However, even if such gap 22 is ensured, there will be a risk that luminance unevenness occurs in the gap 22. The following description will discuss, with reference to Fig. 9, a reason why luminance unevenness occurs in the gap 22. Fig. 9 illustrates a mechanism for causing light to exit from the light guide 21. Note that the configuration illustrated in Fig. 9 is a comparative configuration and not included in the scope of the present invention. In the comparative configuration illustrated in Fig. 9, when seen in a cross section orthogonal to the longitudinal direction of the light guide 21, two light guides 21 having a same thickness (a distance from a light-exit surface of the light guide 21 to a counter surface on an opposite side of the light-exit surface) (5 mm in Fig. 9) are arranged adjacent to each other, and light scatterers 23 are provided on the counter surface on the opposite side of the light-exit surface of the light guide 21. On a side of the light-exit surface of the light guide 21, a diffusion plate 15 having a function for diffusing light is provided at a position spaced apart from the light-exit surface with a predetermined distance (2 mm in Fig. 9). In the configuration in Fig. 9, a distance between the adjacent light guides 21, that is, the gap 22 is 1 mm.

In the configuration in Fig. 9, as illustrated by a dashed line arrow, light passing through the light guide 21 comes into collision with the light scatterer 23 and thus changes its angle at which the light passes through the light guide 21. The total reflection condition is thus broken. Then, the light exits from the light-exit surface 21d or the counter surface 21e on the opposite side of the light-exit surface 21d to the outside of the light guide 21. Here, let it be assumed that a distance between the counter surface 21e and the reflecting sheet 11 is substantially small. In this case, as indicated by a solid line arrow in Fig. 9, light from the counter surface 21e of the light guide 21 is reflected by the reflecting sheet 11, and then re-enters the light guide 21. The light having re-entered the light guide 21 is reflected by a side wall surface 21g, and then re-exits from the light-exit surface 21d.

This makes it difficult for the light to reach an area of the diffusion plate 15 above the gap 22 between the adjacent light guides 21. The area of the diffusion plate 15 directly above the gap 22 will become dark. This causes luminance unevenness.

In order to prevent the occurrence of the luminance unevenness above the gap 22, Embodiment 1 adopts the configuration illustrated in Fig. 5. The following description will detail, with reference to Fig. 5, the light guides 21 provided in the light source module 10 of Embodiment 1.

### (Light Guide)

As illustrated in Fig. 5, the light source module 10 of Embodiment 1 includes (i) a plurality of light guides 21 provided such that their respective longitudinal directions are arranged along each other with the gap 22, and (ii) a plurality of light scatterers 23 for extracting light passing through the light guides 21, the light scatterers 23 serving as light path changing sections. The light scatterers 23 are provided on (i) a light-exit side of the light guides 21 or (ii) an opposite side of the light-exit side of the light guides 21, i.e., a side in which the reflecting sheet 11 is provided.

In order to prevent the occurrence of the luminance unevenness above the gap 22, each of the light guides 21 has thin parts 21 b as side end parts (facing parts) each facing an adjacent light guide 21, as illustrated in Fig. 5. The thin part 21b is formed so as to be thinner than the thick part 21c configured to be a central part of the light guide 21 in a cross section orthogonal to the longitudinal direction of light guide 21. That is, each of the light guides 21 is constituted by thin parts 21b on both sides and the thick part 21c therebetween.

According to the configuration illustrated in Fig. 5, the light guide 21 of Embodiment 1 has, in the cross section, a substantially T shape in which absent parts 21f are provided on the light-exit side or the reflecting sheet side in the side end part of the light guide 21. That is, the light guide 21 is constituted by (i) the thick part 21c which is formed thicker and (ii) the thin parts 21b which are formed thinner. In Embodiment 1, the light guide 21 is provided such that the thin parts 21b are positioned on the reflecting sheet 11 side. In other words, the absent parts 21f are provided on the light-exit side of the light guide 21. The light guide 21 has a counter surface (constituted by two thin parts 21b and one thick part 21c) on an opposite side of the light-exit surface, the counter surface being planar. In this context, the planar surface is to be understood as a surface including no absent parts. The planar surface encompasses a completely planar surface and a substantially planar surface having the same scope of effect as that of the completely planar surface.

The following description will discuss why the present configuration can prevent the occurrence of the luminance unevenness.

Let it be assumed that the absent parts 21f are provided on the light-exit side of the light guide 21, as illustrated in Fig. 5. As indicated by a dashed line arrow in Fig. 5, in the thick part 21c of the light guide 21, light passing through the light guide 21 comes into collision with the light scatterer 23 and changes its angle at which the light passes through the light guide 21. The total reflection condition is thus broken. Then the light exits from the light-exit surface 21d to the outside of the light guide 21 and travels towards the diffusion plate 15. In this light path, however, the light does not reach an area of the diffusion plate 15 above a central part of the gap 22. In contrast, in the thin parts 21b of the light guide 21 with the absent parts 21f being arranged on the light-exit side, a large space can be provided between the light-exit surface 21d and the diffusion plate 15 in the vicinity of the gap 22 since the absent parts 21f are provided there. As the result, as indicated by a solid line arrow in Fig. 5, light passing through the light guide 21 comes into collision with the light scatterer 23 and changes its angle at which the light passes through the light guide 21. The total reflection condition is thus broken. Then, the light is reflected by the reflecting sheet 11 provided on the side of the counter surface 21e, and exits from the light-exit surface 21d of the thin part 21 b to the outside of the light guide 21. This allows the light to easily illuminate the area of the diffusion plate 15 above the gap 22 between the light guides 21. Therefore, the luminance unevenness above the gap 22 is difficult to be caused.

That is, in a side-edge (also referred to as a side-light) type light source module 10, a plurality of light guides 21 constituting a light guide plate 20 are provided such that their respective longitudinal directions are arranged along each other with the gap 22. This causes the light emission in the gap 22 to be weakened, and results in luminance unevenness in the light guide plate as a whole. However, in Embodiment 1, the absent parts 21f are provided on the light-exit side of the respective thin parts 21 b. This allows (i) light having exited from the light guide 21 or (ii) reflected light resulting from reflection of the light (i) by the reflecting sheet 11, to pass through the absent part 21f of the light guide 21 without re-entering the light guide 21. The light can thus illuminate the diffusion plate 15 through the gap 22.

In Embodiment 1, by providing the thin parts 21b, it is possible to provide the light source module 10 that enables (i) avoiding lack of luminance in the gap 22 and (ii) reducing the occurrence of luminance unevenness.

Further, luminance unevenness can be reduced more effectively in a case where the diffusion plate 15 is provided above the light-exit surface 21d of the light guide 21 at a distance D of 2 mm, for example, as with Embodiment 1, than in a case where the diffusion plate 15 is provided closely to the light-exit surface 21d of the light guide 21.

Note that the thin parts 21b which are adjacent to each other can have facing surfaces (21g in Fig. 5) which are bowed, the facing surfaces facing to each other. For example, a first thin part 21b can have a first surface 21g which is bowed towards a second surface 21g of a second thin part 21b in a convex shape, and the second surface 21g of the second thin part 21b can be bowed towards the first 21g of the first thin part 21b in a convex shape.

According to the configuration illustrated in Fig. 5, even if the gap 22 between the light guides 21 becomes larger to some extent, it is possible to suppress reduction in luminance. However, if the respective light guides 21 are only disposed without being fixed, then the light guides 21 would be displaced from the respective predetermined positions. This will result in luminance unevenness and make it difficult to carry out pseudo impulse type display appropriately.

In view of these circumstances, in Embodiment 1, a plurality of support members 31 for supporting the light guides 21 at predetermined positions are provided below the light guide plate 20 (on an opposite side of the light-exit side of the light guide plate 20), as illustrated in Fig. 2.

The following description will discuss the support members 31.

### (Configuration of Support Member)

Fig. 1 is a cross sectional view taken along the line X-X' in Fig. 4, illustrating schematically main components of the light source module 10 of Embodiment 1.

As illustrated in Fig. 1, the support member 31 has (i) a base 31c arranged on an opposite side of the light-exit surface of the light guide 21, and (ii) protrusions 31a protruding from the base 31c along the gap 22 between the adjacent light guides 21. Two of the protrusions 31a sandwich one light guide 21 so as to fix the light guide 21.

In Embodiment 1, the support member 31 is configured such that (i) a first protrusion 31a provided on one end part of the base 31c and (ii) a second protrusion 31a provided on a central part of the base 31c support one light guide 21, and (i) a third protrusion 31a provided on the other end part of the base 31c and (ii) the second protrusion 31a support another light guide 21. That is, according to Embodiment 1, two light guides 21 are supported by one support member 31 (three protrusions 31a). Note, however, that the present invention is not limited to these numbers.

According to Embodiment 1, the reflecting sheet 11 is arranged between the base 31c and the light guides 21 (see Fig. 1). That is, the reflecting sheet 11 has holes through which the protrusions 31a pass. This makes it possible to fix the reflecting sheet 11 beneath the light guide 21 reliably. If a distance between the reflecting sheet 11 and the light guide 21 varies, there would be a risk that luminance unevenness occurs. However, by sandwiching the reflecting sheet 11 by the base 31c and the light guide 21, as with Embodiment 1, it is possible to maintain a constant distance between the reflecting sheet 11 and the light guide 21.

The reflecting sheet 11 has the through holes through which the protrusions 31a pass. Each of the through holes of the reflecting sheet 11 has preferably a dimension such that the through hole is completely covered with a surface of the base 31c when the reflecting sheet 11 is arranged between the base 31c and the light guides 21. That is, the through hole of the reflecting sheet 11 is preferably formed so as to be smaller than the surface area of the base 31c. On the assumption that the reflecting sheet 11 having a through hole which is larger than the surface area of the base 31 c is arranged between the base 31 c and the light guides 21, other member (a chassis 2 in Fig. 2) provided on a rear surface of the base 31c can be viewed from part of the through hole. This causes decrease in luminance. In contrast, in a case where the through hole has a dimension such that it is completely covered with the surface of the base 31c, then such decrease in luminance can be prevented.

### <Base>

As illustrated in Fig. 4, the base 31c of the support member 31 has a substantially rectangular shape. Protrusions 31 a are provided on (i) both end parts and (ii) a central part of a light guide-supporting surface of the base 31c.

Note that the base 31c and the protrusions 31a can be integrated into a single unit. Alternatively, the protrusions 31a can be bonded to the base 31c by means of adhesive.

### <Protrusion>

As illustrated in Fig. 1, each of the protrusions 31a is provided along the gap 22 between the adjacent thin parts 21b.

More specifically, the protrusion 31a is preferably in contact with facing surfaces (side wall surfaces 21g in Fig. 5) of the adjacent thin parts 21b, as illustrated in Fig. 1. Of course, the protrusion 31 a can be provided at a distance of about 0.5 mm from each of the facing surfaces, taking into consideration production tolerances of the light guides 21 or the support member 31. In this case, the protrusion 31a will exist within the gap 22 between the light guides 21. This makes it possible to surely support the respective light guides 21 with a predetermined distance. In addition, the protrusion 31a is preferably configured to be in contact with light-exit surfaces 21d (see Fig. 5) of the thin parts 21b, as illustrated in Fig. 1. Of course, the protrusion 31a can be provided at a distance of about 0.5 mm from each of the light-exit surfaces 21d, taking into consideration production tolerances of the light guides 21 or the support member 31. In other words, between the adjacent light guides 21, the protrusion 31a is provided, which is configured to be larger in dimension (width) in its part located in the absent parts 21f than its part located between the thin parts 21b. Since the protrusion 31a is configured to be partially in contact with the light-exit surfaces 21d of the thin parts 21b (see Fig. 5), the protrusion 31a can prevent the light guides 21 from rising towards the light-exit side. It is further possible to prevent a member (for example, the diffusion plate 15 in Fig. 1) provided on the light-exit side of the light guide 21 from being damaged by the light guide 21 risen towards the light-exit side.

The luminance unevenness can result from a material of the support member 31, as will be described later. Besides, the luminance unevenness can results from displacement of the light guides 21 from the predetermined positions, as described above. The luminance unevenness resulting from the displacement of the light guides 21 can be avoided by the protrusion 31a which can fix the light guides 21 reliably at the predetermined positions. This is because the protrusion 31a is in contact with (i) the facing surfaces (side wall surfaces 21g in Fig. 5) and (ii) light-exit surfaces 21d (see Fig. 5) of the adjacent thin parts 21b, as illustrated in Fig. 1. It is thus possible for the liquid crystal display device to (i) carry out appropriate pseudo impulse type display and (ii) improve display quality.

Further, the light-exit surfaces 21d of the thick parts 21c of the light guides 21 protrude farther than distal ends 31a' of the protrusions 31a of the support member 31 in the light-exit direction. That is, each of the distal ends 31a' of the protrusions 31a of the support member 31 is located at a position (recess) depressed from the light-exit surface 21d of the thick part 21c of the light guide 21. As to a distance from the light-exit surface 21d of the thick part 21c of the light guide 21 to the distal end 31a' of the protrusion 31a, that is, a distance from a surface of the diffusion plate 15 which surface faces the light guide 21 to the distal end 31a', on the assumption that the diffusion plate 15 is arranged on the light-exit surface 21d of the thick part 21c of the light guide 21, it is possible to set the distance suitably so that no light from the light guide 21 returns so as to cause decrease in luminance. However, the distance is preferably 0.5 mm at longest. By defining such a distance, it is possible to (i) prevent light emitted from the light guide 21 from returning and (ii) suppress the decrease in luminance.

A protruding height of the protrusion 31 a from the surface of the base 31c can be set to about 3.5 mm, for example.

Further, the protrusion 31a is configured to have a predetermined length along the longitudinal direction of the light guide 21. Let it be assumed that a gap between the adjacent thin parts 21b is about 1 to 2 mm, as described above, i.e., the protrusion 31a has a width of about 1 to 2 mm in its part being in contact with the adjacent thin parts 21b. In such a case, the protrusion 31a preferably has the predetermined length of preferably 6 mm at shortest, taking into consideration durability against impact or the like. However, if the predetermined length is too large, then it causes significant decrease in luminance resulting from the support member. It is thus preferable that the predetermined length is about 6 to 10 mm.

### (Material of Support Member)

As to a material of the support member 31, it is preferable that the support member 31 is a high reflective member (such as a high reflective polycarbonate member).

Note that Embodiment 1 describes a configuration in which the reflecting sheet 11 is provided below the light guide plate 20. However, the reflecting sheet 11 is not an essential component of the present invention, as described above. Therefore, in a case where no reflecting sheet 11 is provided, the support member 31 can be provided on a member arranged below the light guide plate 20. Alternatively, a support member 31 can be provided independently below the light guide plate 20, on the assumption that a base part (the base 31c in Fig. 6) of the support member 31 is formed in the extended shape under the light guide plate 20.

According to Embodiment 1, the support members 31 are provided below the light guide plate 20 in a scattered manner, as illustrated in Fig. 4. Note, however, that the present invention is not limited to this, and therefore the support members 31 can be provided in a straight line from the light guide 21 located in the bottom of Fig. 4 to the light guide 21 located in the top of Fig. 4. In this case, the support members 31 can be provided within the central part (within the image plane effective area) of the light guide plate 20. Alternatively, the support members 31 can be provided in at least any one of side end parts of the light guide plate 20. However, the support members 31 are preferably provided within an image plane effective area, in order to suppress the displacement of the light guides 21 effectively.

### (Operational Effects of Embodiment 1)

As described above, the light source module 10 of Embodiment 1 includes: a plurality of light guides 21 being provided such that their respective longitudinal directions are arranged each other with a gap therebetween; light sources for causing light to enter the plurality of light guides 21; and a support member 31 which includes (i) a base 31c provided on an opposite side of a light-exit surface 21d of the light guide 21 and (ii) protrusions 31a each of which protrudes from the base 31c along the gap 22 between the light guides 21 adjacent to each other, the light-exit surface 21d of each of the plurality of light guides 21 being such that the light-exit surface 21d of a thick part 21c protrudes farther than a distal end 31a' of the protrusion 31a towards a diffusion plate 15. Therefore, in a configuration in which the light guide plate 20 is divided into a plurality of light guides 21, and the divided plurality of light guides 21 are provided such that their respective longitudinal directions are arranged along each other, it is possible by providing the support member 31 to maintain the gap 22 of a predetermined dimension between the light guides 21.

Further, the light-exit surface 21d of the thick part 21 c of the light guide 21 protrudes farther than the distal end 31 a' of the protrusion 31a of the support member 31 in the light-exit direction. That is, the distal end 31a' of the protrusion 31a of the support member 31 is located at a position (recess) depressed from the light-exit surface 21d of the thick part 21c of the light guide 21. According to the configuration, a viewer who views the liquid crystal panel 3 illustrated in Fig. 2 can hardly recognize the support members 31 with the protrusions 31a. Luminance unevenness resulting from the support members 31 can thus be prevented.

Therefore, even in a case where the light source module 10 is configured such that the light guides 21 are supported by the support members 31 with the protrusions 31 a within an image plane effective area, as illustrated in Fig. 4, the light source module 10 enables to facilitate a high quality display. And, the light source module 10 can contribute to improvement in display quality of the liquid crystal display device 1 equipped with the light source module 10 as a backlight.

### [Embodiment 2]

The following description will discuss Embodiment 2. Embodiment 2 is equivalent to Embodiment 1, except that a support member 31 has a different shape from that of Embodiment 1. For easy explanation, therefore, the same reference numerals are given to the same members having the respective same functions as members in Embodiment 1, and their descriptions will be omitted.

Figs. 6(a) through 6(d) illustrate a shape of the support member 31 in Embodiment 2. Fig. 6(a) is a top view of the support member 31 (seen from a side of the liquid crystal panel 3 in Fig. 2), illustrating a light guide-supporting surface of the support member 31. Fig. 6(b) is a side view of the support member 31 seen from the same position as in Fig. 1. Fig. 6(c) is a bottom view illustrating a reverse surface side of the light guide-supporting surface shown in Fig. 6(a). Fig. 6(d) is a side view illustrating the support member 31 shown in Fig. 6(b) upside down.

### <Base>

The base 31c of Embodiment 1 (see Fig. 1) has no additional structure on the counter surface on an opposite side of the surface on which the protrusions 31a are formed. In contrast, the support member 31 of Embodiment 2 (see Figs. 6(a) through 6(d)) differs from that of Embodiment 1 in that the base 31c of Embodiment 2 includes latch members 31b on both end parts and a central part on a counter surface (reverse surface) on an opposite side of the light guide-supporting surface.

### <Protrusion>

Fig. 7(a) is a perspective view illustrating part of the support member 31 of Embodiment 2, i.e., illustrating a surface of the support member 31 on which a protrusion 31a is provided. The description on Embodiment 1 has discussed that each of the protrusions 31 a is configured to have a predetermined length along the longitudinal direction of the light guide 21. In Embodiment 2, as to the predetermined length along the longitudinal direction of the light guide 21, the protrusion 31a has a further feature that the predetermined length is gradually tapered from a proximal part near the base 31c to a distal end 31a' of the protrusion 31a, as illustrated in Fig. 7(a). Fig. 7(b) is a cross sectional view taken along the line of Q-Q' in Fig. 7(a). As is clear from the cross sectional view of Fig. 7(b), the protrusion 31a of Embodiment 2 is configured such that the protrusion 31 a has a shorter length in the distal end 31a' than in the proximal part adjacent to the base 31c. The protrusion 31a is thus in the shape of trapezoid in the cross sectional view of Fig. 7(b).

Further, the protrusion 31a of the support member 31 of Embodiment 2 is configured to have the distal end 31a' which is bent shaped. As illustrated in Fig. 6(b), the protrusion 31 a is configured such that the bent shaped top part presses the thin part 21b of the light guide 21.

Furthermore, as illustrated in Fig. 7(a), the protrusion 31a is configured such that two structures having different shapes from each other are combined, the two structures being arranged along the predetermined length of the protrusion 31a. Of the two structures, one structure presses, with its bent shaped top part on the distal end 31a', a thin part 21b of one light guide 21, and the other structure presses, with its bent shaped top part on the distal end 31a', a thin part 21b of the other light guide 21. With this configuration, it is possible to support adjacent light guides 21 with a single protrusion 31 a.

Note that the two structures are not necessarily formed separately. The two structures can therefore be formed as an integral unit.

### <Latch Member>

The respective latch members 31b provided on the reverse surface of the base 31 c are configured to be placed in latch holes (not illustrated) formed in the chassis 2 (see Fig. 2) so as to fix the support member 31 to the chassis 2 provided below the support member 31.

Note that, in the configuration in which the reflecting sheet 11 is provided, as with Embodiment 2, it is necessary to cut parts of the reflecting sheet 11 provided between the support member 31 and the chassis 2, in order to fix the support member 31 to the chassis 2. For example, the reflecting sheet 11 is provided with openings through each of which only the protrusion 31a of the support member 31 protrudes, and the base 31c of the support member 31 is located below the reflecting sheet. This makes it possible to eliminate a difference in height (a raised portion) between the reflecting sheet 11 and the base 31c of the support member 31, as compared with a case where the support member 31 is merely disposed on the reflecting sheet 11 without making such openings. As the result, the reflecting sheet 11 can be kept as flat as possible, and reflection unevenness on the reflecting sheet 11 can be eliminated.

### (Operational effects of Embodiment 2)

According to the configuration of Embodiment 2, the protrusion 31a is configured to have a predetermined length along the longitudinal direction of the light guide 21, the predetermined length being gradually tapered from the proximal part near the base 31c to the distal end 31a', as illustrated in Fig. 7(a). This allows, in addition to the operational effects of Embodiment 1, light traveling in the light guide to be directed upwards the light-exit surface of the light guide. The configuration of Embodiment 2 can contribute to improvement in luminance.

### (Modification)

As a modification of Embodiment 2, a configuration illustrated in Fig. 8 will be described below. A protrusion 31a illustrated in Fig. 8 is configured to have an arcuate shape in cross section. The arcuate shaped protrusion 31a can thus hold, with its arc shaped sides, the thin part 21b of the light guide 21.

In a case where the protrusion 31a has the shape exemplified in Fig. 6(b), the protrusion 31a is configured to press the thin part 21b of the light guide 21 from above. In this case, it is somewhat difficult to adjust a pressure force. That is, if the pressure force is too weak, the protrusion 31a cannot fix the light guide 21 on the base 31c reliably, whereas, if the pressure force is too strong, the press of the protrusion 31 a can cause the thin part 21b to be damaged, for example. In contrast, according to the configuration of the support member 31 illustrated in Fig. 8, the protrusion 31a is made from an elastic material which biases in a direction in which the light guide 21 is hold. Accordingly, the thin part 21b of the light guide 21 is biased from not a top surface side but side surface sides thereof. This makes it possible to fix the light guide 21 reliably without causing the thin part 21 b to be damaged.

The present invention is not limited to the Embodiments, and various modifications are therefore possible within a scope defined by Claims. The technical scope of the present invention encompasses embodiments obtained by appropriately combining the technical means disclosed in different embodiments.

In other words, the present invention is directed to a light source device including: a plurality of light guides arranged in a row, the light guides being held by a support member provided between the light guides which are adjacent to each other. Further, in the configuration, it is preferable that the support member has a height which is smaller than a thickness of the light guide. Furthermore, in this configuration, it is preferable that the support member has a finger part (protrusion) which is thicker in its bottom part and thinner in its top part. Moreover, in this configuration, it is preferable that the support member holds the light guides which are adjacent to each other.

The present invention is not limited to the Embodiments. A person skilled in the art can modify the present invention in various ways within the scope of Claims. That is, a new embodiment can be obtained by combining the appropriately modified technical means within the scope of Claims. That is, the specified embodiments described in the Detailed Description of the Invention are merely to clarify the technical contents of the present invention, and the present invention is not to be construed in a narrower sense, while being limited to such embodiments. Various modifications can be embodied within the spirit of the present invention and the scope of the attached Claims.

### (Generalization of the Present Invention)

A surface light source device in accordance with the present invention is a surface light source device including: a plurality of light guides being provided such that their respective longitudinal directions are arranged along each other with a gap therebetween; light sources for causing light to enter the plurality of light guides; and a support member which includes (i) a base provided on an opposite side of light-exit surfaces of the light guides and (ii) protrusions each protruding from the base along the gap; the light-exit surface of each of the light guides being such that at least part of the light-exit surface protrudes farther than a distal end of the protrusion in a light-exit direction.

According to the configuration, the support member is provided, in a configuration in which the light guide plate is divided into a plurality of light guides, and the plurality of light guides are provided such that their respective longitudinal directions are arranged along each other. It is thus possible to maintain the gap of a predetermined dimension between the light guides.

Further, according to the configuration of the surface light source device of the present invention, the light-exit surface of each of the light guides is such that at least part of the light-exit surface protrudes farther than a distal end of the protrusion in a light-exit direction. That is, the distal end of the protrusion of the support member is located at a position (recess) depressed from the light-exit surface of the light guide. According to the configuration, a viewer who views a display means (such as a liquid crystal panel) arranged on a light-exit surface side of the light guide can hardly recognize the support member with the protrusions. That is, the luminance unevenness resulting from the support member, as early described, can be prevented.

Therefore, even in a case where the surface light source device is configured such that the light guides are supported by the support member with the protrusions within the image plane effective area, the surface light source device enables to facilitate a high quality display. And, the surface light source device can contribute to improvement in display quality of a liquid crystal display device equipped with such a surface light source device as a backlight.

It is preferable that, in addition to the above-mentioned configuration, the surface light source device in accordance with the present invention is configured such that the protrusion of the support member has a predetermined length along a longitudinal direction of the light guide, and the protrusion of the support member has the predetermined length which is gradually tapered from a proximal part of the protrusion near the base to the distal end.

According to the configuration, the protrusion of the support member has a predetermined length along the longitudinal direction of the light guide, and the protrusion of the support member has the predetermined length which is gradually tapered from the proximal part of the protrusion near the base to the distal end. This allows light traveling in the light guide to be directed upwards the light-exit surface of the light guide. The configuration can contribute to improvement in luminance.

It is preferable that, in addition to the above-mentioned configuration, the surface light source device in accordance with the present invention is configured such that each of the plurality of light guides has a counter surface on the opposite side of the light-exit surface, the counter surface being planar, each of the plurality of light guides has (i) facing parts each of which faces an adjacent light guide and (ii) a central part being sandwiched by the facing parts, and the light guide has a thickness which is thinner in the facing parts than in the central part, where the thickness of the light guide is a distance from the counter surface to the light-exit surface of the light guide.

According to the configuration, it is possible by providing the facing parts to avoid lack of luminance in the gap between the light guides. Therefore, it is possible to provide a surface light source device capable of reducing the occurrence of luminance unevenness.

It is preferable that, in addition to the above-mentioned configuration, the surface light source device in accordance with the present invention is configured such that the protrusion of the support member is in contact with the light-exit surfaces of the facing parts.

According to the configuration, the protrusion is configured to be in contact with the light-exit surfaces of the facing parts. It is thus possible to prevent the light guides from rising towards the light-exit side. This allows preventing a member arranged on the light-exit side of the light guide from being damaged by the risen light guide towards the light-exit side.

The present invention encompasses an electronic apparatus including a surface light source device having the above-mentioned configuration.

### Industrial Applicability

The present invention relates to (i) a light source module including a side-edge (also referred to as a side-light) type light guide plate through which light from light sources is emitted planarly, and (ii) an electronic apparatus including the light source module. The present invention is applicable to a surface light source device, as a light source module, such as a backlight, and an electronic apparatus, such as a liquid crystal display device.

### Reference Signs List

- 1: Liquid crystal display device (Electronic apparatus)
- 2: Chassis
- 3: Liquid crystal panel
- 4: Bezel
- 10: Light source module (surface light source device)
- 11: Reflecting sheet
- 12: LED (Light source)
- 13: LED substrate
- 14: Reflector
- 15: Diffusion plate (Light path changing section)
- 16: Optical sheet group
- 20: Light guide plate
- 21: Light guide
- 21a: Edge surface
- 21b: Thin part
- 21c: Thick part
- 21d: Light-exit surface
- 21e: Facing surface
- 21f: Absent part
- 21g: Side wall surface
- 22: Gap
- 23: Light scatterer (Light path changing section)
- 31: Support member
- 31a: Protrusion
- 31a': Distal end
- 31b: Latch member
- 31c: Base

## Claims

1. A surface light source device comprising:
a plurality of light guides being provided such that their respective longitudinal directions are arranged along each other with a gap therebetween;
light sources for causing light to enter the plurality of light guides; and
a support member which includes (i) a base provided on an opposite side of light-exit surfaces of the light guides and (ii) protrusions each protruding from the base along the gap;
the light-exit surface of each of the light guides being such that at least part of the light-exit surface protrudes farther than a distal end of the protrusion in a light-exit direction.

2. The surface light source device as set forth in Claim 1, wherein:
the protrusion of the support member has a predetermined length along a longitudinal direction of the light guide, and
the protrusion of the support member has the predetermined length which is gradually tapered from a proximal part of the protrusion near the base to the distal end.

3. The surface light source device as set forth in Claim 1 or 2, wherein:
each of the plurality of light guides has a counter surface on the opposite side of the light-exit surface, the counter surface being planar,
each of the plurality of light guides has (i) facing parts each of which faces an adjacent light guide and (ii) a central part being sandwiched by the facing parts, and
the light guide has a thickness which is thinner in the facing parts than in the central part, where the thickness of the light guide is a distance from the counter surface to the light-exit surface of the light guide.

4. The surface light source device as set forth in Claim 3, wherein:
the protrusion of the support member is in contact with the light-exit surfaces of the facing parts.

5. An electronic apparatus comprising a surface light source device recited in any one of Claims 1 through 4.
